Europäisches Patentamt

European Patent Office

Office européen des brevets

(11) Publication number: **0 250 138 B1**

# EUROPEAN PATENT SPECIFICATION

(45) Date of publication of patent specification: **09.09.92** (51) Int. Cl.⁵: **G11B 5/596**, G11B 21/10

(21) Application number: **87305035.5**

(22) Date of filing: **08.06.87**

(54) **Servo system for a hard disk drive.**

(30) Priority: **16.06.86 JP 139711/86**

(43) Date of publication of application:
**23.12.87 Bulletin 87/52**

(45) Publication of the grant of the patent:
**09.09.92 Bulletin 92/37**

(84) Designated Contracting States:
**DE FR GB NL**

(56) References cited:
**EP-A- 0 069 549**
**EP-A- 0 173 844**
**EP-A- 0 189 503**
**EP-A- 0 194 641**
**US-A- 4 396 959**

(73) Proprietor: **SONY CORPORATION**
**7-35 Kitashinagawa 6-chome Shinagawa-ku**
**Tokyo 141(JP)**

(72) Inventor: **Hoshima, Susumu Sony Corporation**
**7-35, Kitashinagawa 6-chome Shinagawa-ku**
**Tokyo(JP)**

(74) Representative: **Ayers, Martyn Lewis Stanley**
**et al**
**J.A. KEMP & CO. 14 South Square Gray's Inn**
**London, WC1R 5EU(GB)**

EP 0 250 138 B1

## Description

The invention relates to a servo system for a hard disk drive for positioning a read/write (R/W) head.

In a conventional hard disk drive, for a servo system for positioning an R/W head at an objective track (target track), various types mentioned below are known.

One of them employs one disk surface of a plurality of disk surfaces only for positioning. In detail, servo signals are recorded on this disk surface, the servo signals are always read out, and the positions of R/W heads provided on the other disk surfaces, respectively, are controlled by the thus read out servo signals.

This system has a disadvantage in that an off-track occurs when there is a temperature difference between the disk surface for servo and the disk surface for data. Also, since the disk surface only for servo is necessary, there is a disadvantage of cost rise per memory capacity.

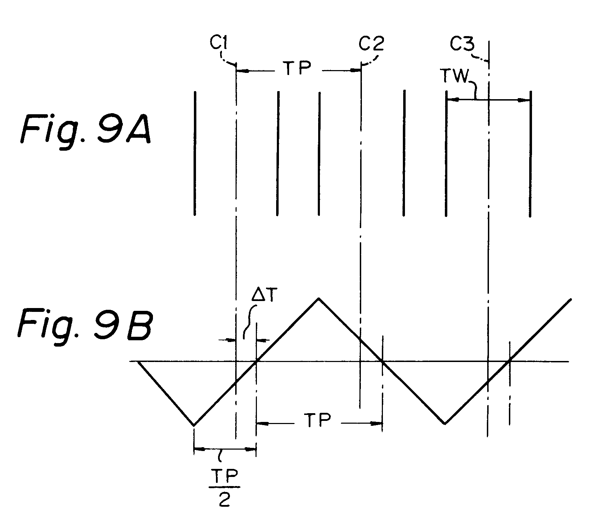

Another conventional servo system uses an optical sensor for coarse positioning and embedded servo signals for fine positioning. For instance, as shown in U.S. Pat. No. 4,396,959, a R/W head is fixed, and an optical sensor is provided integrally thereto to detect the position of the R/W head. At A of Fig. 9 of the accompanying drawings, when tracks having their centers shown at C1, C2 and C3, respectively and a track width TW are formed at a track pitch TP, the R/W head moves toward the direction crossing these tracks. In this case, the output signal of the optical sensor has a level change of triangular shape as indicated at B of Fig. 9 of the accompanying drawings. The point where the output of the optical sensor crosses a reference level is the centre of a track to be detected by the optical sensor.

However, a thermal off-track shown at T in Fig. 9 may take place due to expansion and contraction, etc of the head arm or disk platter because of a temperature change. Fine positioning using the embedded servo signals is possible within the range in which the off-track does not exceed (TP/2). As a result, when the above-mentioned thermal off-track exceeds (TP/2), the positioning cannot be done to cause a track shift.

EP-A-173844 (IBM Corp) discloses a magnetic disc and transducer system according to the preamble of claim 1 in which servo signals embedded in adjacent groups of concentric recording tracks on one side of the disc are spaced circumferentially from each other so that one transducer in a multiple transducer head can read data from one group of tracks while another transducer passes over the servo signal on an adjacent group. The system includes means for switching the alternate data and servo signals from each transducer to the appropriate destination.

In addition, in the Japanese Patent Disclosure No. 60-136068, a servo head is equipped separately from an R/W head, and a technique for performing coarse positioning based on the output signal of the servo head is disclosed.

In the above-mentioned reference, no solution is described to the problem occurring when the servo head scans the recording positions of the embedded servo signals, which are embedded in a sector fashion at intervals.

Namely, since the servo head reproduces data when it is positioned on a track with data recorded and does not reproduce when it is positioned on a guard band having no data recorded, track-crossing information can be derived from an envelope change of the output signal of the servo head. However, when the servo head scans the embedded servo signals, the track-crossing information is disturbed with the result that the detection of the movement velocity of the R/W head cannot be done correctly.

An object of the invention is, therefore to provide a servo system for a hard disk drive for preventing track-crossing information from being disturbed when a servo head scans embedded servo signals.

According to a first aspect of the invention, there is provided a servo system for positioning data transducer means relative to a plurality of substantially concentric data tracks on magnetic disk surfaces, said system comprising:

data transducer means including at least first and second data transducer members respectively located relative to different magnetic disk surfaces, for reading and writing a data signal from and onto said concentric data tracks and for reading a servo signal from servo sectors provided on said magnetic disk surfaces;

servo transducer means including at least first and second servo transducer members respectively located in relation to said first and second data transducer members and sensing crossing of said concentric data tracks in a track seeking operation to provide a track-crossing signal;

positioning means for positioning said data transducer members at selected ones of said concentric data tracks during a data read/write operation and for moving said data transducer members with said servo transducer members from track to track during a track seeking operation; and

control means for controlling said positioning means in response to outputs of said first and second servo transducer members and a servo signal read by said data transducer means,

characterised in that a positional relationship between said first and second servo transducer members relative to said servo sectors is established so that the servo transducer members are positioned on respective ones of said servo sectors on a time exclusive basis and in that the control means comprises selecting means for selecting the outputs of said first and second servo transducer members at a predetermined timing so as to inhibit using the output of the servo transducer member locating on a servo sector.

According to a further aspect the present invention provides a disk-based data storage system including a servo-system according to the first aspect of the invention and

a magnetic disc carrying a plurality of substantially concentric data tracks on each of different surfaces and having servo sectors embedded in said tracks to provide a servo signal for controlling positioning of the data transducer means.

As will become apparent from the following description the invention can provide a servo system for a hard disk drive in which no special disk surface for servo is needed and any track shift due to ageing and temperature changes between the disk surface for servo and the disk surface for data is prevented and in which any track shift due to thermal off-track is prevented by providing position information required for coarse positioning and fine positioning from the identical disk surface.

In operation, the level of the reproduced output signal of servo head means decreases when it crosses a guard band. A track-crossing signal is developed from the decrease in this level. By dividing the track pitch by the period of the track-crossing signal, the velocity of the R/W head means can be detected. This means for velocity servo performs the control so that the R/W head means moves at velocity defined by a velocity profile to perform coarse positioning of the R/W head means into the vicinity of a target track. In the neighborhood of the target track, fine positioning is made by the embedded servo signals so that the center of the R/W head means coincides with that of the target track.

When the servo head means crosses a data track and the guard band, a track crossing signal with a period corresponding to the track pitch is formed. However, when the servo head means scans the embedded servo signals, the period of the track-crossing signal does not correspond to the track pitch accurately. With this invention, the embedded servo signals on the different disk surfaces are recorded at different positions in the track-extended direction. Also, since the reproduced signal of the servo head for scanning the different disk surfaces is switched, a track-crossing signal, which is not affected by the embedded servo signals, can be developed.

Additionally, the invention neither performs coarse positioning using an optical sensor nor causes the problem that positioning becomes impossible due to a large thermal off-track. Also, the problem encountered with a system provided with a disk surface only for servo purposes does not arise.

Other features of the invention will be apparent from the following description when taken in connection with the accompanying drawings, in which:

Fig. 1 is a schematic diagram of track patterns in an embodiment of this invention;

Fig. 2 is a schematic diagram for explaining one example of embedded servo signals;

Fig. 3 is a schematic diagram for describing a head arrangement relation, a position detection signal and a track-crossing signal;

Fig. 4 is a block diagram of one embodiment of the invention;

Figs. 5, 6 and 7 are schematic diagrams for describing a positioning operation;

Fig. 8 is a schematic diagram for describing an operation in the movement to an adjacent track; and

Fig. 9 is a schematic diagram for explaining a problem in a conventional servo system.

One embodiment of this invention will be described herein by referring to the drawings. This description will be given in the order of the following items:

a. Track patterns and embedded servo signals
b. Head arrangement and reproduced signals
c. Servo circuit
d. Modifications

a. Track patterns and embedded servo signals

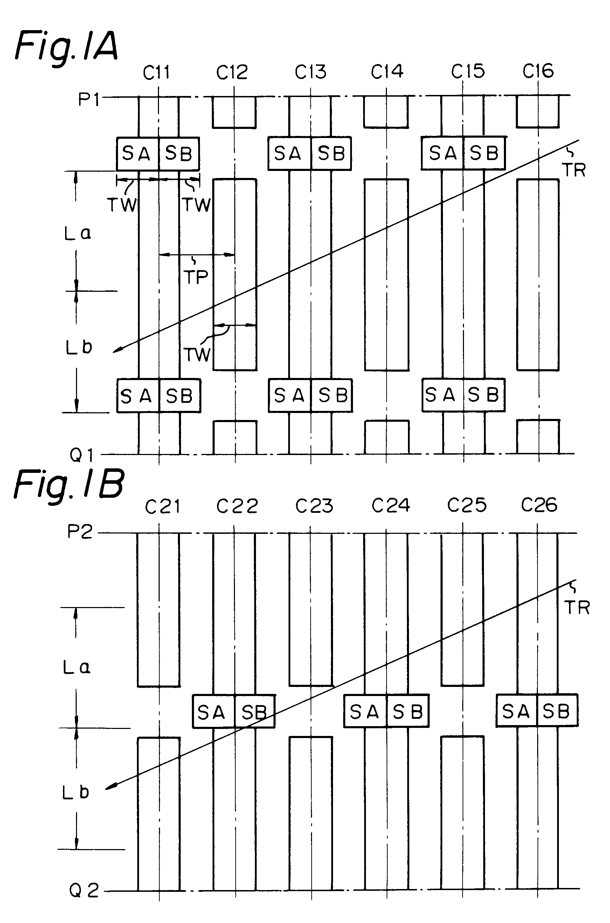

On disk surfaces of a hard disk, many tracks are formed concentrically. Embedded servo signals are prerecorded on each of the tracks by the maker. The embedded servo signals are recorded using an R/W head. After recording, protection processing is carried out to prevent their erasure. Fig 1 shows enlarged areas of track patterns formed onto one surface and the other surface of one disk. A of Fig. 1 shows a range of (P1 ~ Q1) of the track patterns formed on one surface of the disk, and B of Fig. 1 indicates a range of (P2 ~ Q2) of the track patterns formed on the other surface of the disk. Here, the positions of P1 and P2 and the positions of Q1 and Q2 are those corresponding in the direction of the disk thickness.

In one surface, data tracks are formed making C11, C12, C13 ... their centers, whereas in the other surface, data tracks with their centers C21, C22, C23 are provided. The data tracks recorded on both surfaces of the disk have a track pitch TP and a track width TW. The embedded servo signals are recorded at a predetermined interval lengthwise of the data tracks. For instance, the embedded servo signals are recorded on six to ten portions for one track. In Fig. 1, SA and SB are the embedded servo signals. The recording of the embedded servo signals is made at the timing of pulses generated in synchronism with the rotation of the disk. For example, the recording positions of the embedded servo signals of each track are defined by a pulse generator comprising a magnet and a Hall element. The pulse generator may be the one that generates one pulse every revolution of the disk without being restricted to the one that generates pulses in one-to-one correspondence to plural embedded servo signals. In the latter case, the pulse signals corresponding to the plural embedded servo signals are formed by a frequency divider.

Since the embedded servo signals are recorded by the R/W head with the track width TW, the width of both the embedded servo signals SA and SB becomes 2TW. As a result, the boundary position of the SA and SB coincides with the center of the track. Because the embedded servo signals SA and SB have the width 2TW, they cannot be provided on all the tracks. As a result, in one surface of the disk, those signals are provided on the tracks with odd numbers, and in the other surface of the disk, the signals are provided on the tracks with even numbers. Moreover, the embedded servo signals SA and SB recorded on one surface of the disk and the embedded servo signals SA and SB recorded on the other surface of the disk differ in their recording positions in the lengthwise direction from one another. In this example, a shift equal to almost one-half of the interval in the lengthwise direction of the embedded servo signals SA and SB is provided.

As mentioned below, a servo head, which is integrally moved together with the R/W head, and a track-crossing signal is developed by detecting the envelope of the reproduced output of the servo head. Because the recording positions of the embedded servo signals SA and SB are shifted on one surface relative to the other surface of the disk, the track-crossing signal can be obtained accurately without being affected by the embedded servo signals SA and SB on the other surface.

In Figure 1, an oblique line shows the scanning trail of the servo head at the time of a track seek operation. When the servo head scans a data track and when the servo head scans a guard band, the level of the envelope of the reproduced output of the servo head varies. At the time the guard band is being scanned, the level of the envelope of the reproduced output is lowered. In response to this, the track-crossing signal is derived. The velocity of the head is detected by dividing the track pitch TP by the period of the track-crossing signal.

When the servo head scans the embedded servo signals SA and SB, the level change of the envelope of the reproduced output is different from that when a guard band is being scanned. For this reason, the period of the track-crossing signal cannot be detected correctly. In this invention, the influence of the embedded servo signals is eliminated by switching the track-crossing signal between an interval shown by La and an interval shown by Lb. This switching is performed using an output pulse signal similar to that used when the embedded servo signals are recorded.

As indicated at A of Fig. 1, a track-crossing signal obtained from one surface of the disk is selected in the interval La almost equal to one-half of the interval from the ends of the embedded servo signals SA and SB to the occurrence of the next embedded servo signals. In the interval La, the head trail does not pass over the embedded servo signals, and the track-crossing signal generated in the interval La is not affected by the embedded servo signals SA and SB at all. Also, in the interval Lb, also almost equal to one-half of the interval from the ends of the embedded servo signals SA and SB to the occurrence of the next embedded servo signals, a track-crossing signal obtained from the other surface of the disk is selected. In the interval Lb, the head trail does not pass over the embedded servo signals so that the track-crossing signal generated in the interval Lb is not affected by the embedded servo signals SA and SB at all. As a result, in the interval La, the track-crossing signal obtained from one surface of the disk is selected, while in the interval Lb, the track-crossing signal obtained from the other surface of the disk is selected.

Moreover, since the recording positions of the embedded servo signals are shifted on one and the other surfaces of the disk, the probability of reading the embedded servo signals becomes high, thus enabling switching from velocity servo to positioning servo virtually instantly.

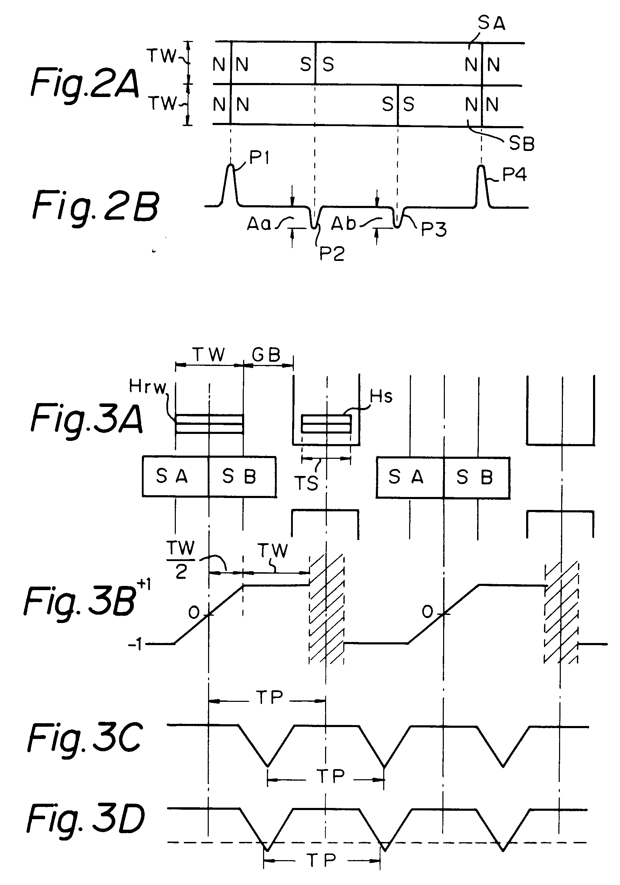

For the embedded servo signals SA and SB, a tri-bit pattern shown in Fig. 2 can be employed. A of Fig. 2 shows magnetic recording patterns, and B of Fig. B is a reproduced waveform obtained when the R/W head performs scanning. The embedded servo signal SA is composed of the recording pattern from which positive pulse signals P1 and P4 are obtained, respectively, and the recording pattern from which a negative pulse signal P2 is generated at the timing delayed from the pulse signal P1 during one-third period between the pulse signals P1 and P4. The embedded servo signal SB is made up of the recording pattern (timing in coincidence with the embedded servo signal) from which the positive pulse signals P1 and P4 are obtained, respectively, and the recording pattern from which a negative pulse signal P3 is generated at the timing delayed from the pulse signal P1 during two-thirds between the pulse signals P1 and P4.

When the center of the R/W head with the gap width TW coincides with the boundary of the embedded servo signals SA and SB, the amplitude Aa of the pulse signal P2 is equal to the amplitude Ab of the pulse signal P3. If the center of the R/W head is shifted toward the side of the embedded servo signal SA, the amplitude Aa of the pulse signal P2 is larger than the amplitude Ab of the pulse signal P3. Conversely, if the center of the R/W head is shifted toward the side of the embedded servo signal SB, the relationship (Aa < Ab) is established. The reproduced signals of the embedded servo signals SA and SB read out are converted into a position detection signal with the processing of [(Ab - Aa)/(Ab + Aa)]. When the center of the R/W head and that of the track coincide with each other, (Aa = Ab) is established to provide the position detection signal of zero.

Positioning servo is carried out using this position detection signal so that the center of the R/W head coincides with that of the track. When the R/W operation is being done for a data track during a period in which the R/W head is positioned on the data track, data is received or taken out to and from the R/W head, and during a period in which the R/W head is positioned on the embedded servo signal SA and SB, the embedded servo signals reproduced are taken out from the R/W head. Since the embedded servo signals SA and SB are recorded on every other track, the embedded servo signals read out by the R/W head on the other surface are employed when the embedded servo signals SA and SB are not recorded on a target track to be the objective for the R/W operation. Such switching of the R/W head is required in the course of the positioning servo operation.

b. Head arrangement and reproduced signals

The embodiment is provided with an R/W head Hrw with the gap width TW and a servo head Hs whose center is positioned at an interval of (TP X N or TP X N + 1/2 TP) (N is integer) in the direction of the disk diameter with respect to the center of the R/W head Hrw. These R/W head Hrw and servo head Hs are driven by a common actuator. In this embodiment, as shown at A of Fig. 3, the servo head Hs is arranged at an interval of TP on the side of the inner circumference of the disk. In addition, at A of Fig. 3, the width GB of the guard band is equal to the track width Ts of the servo head Hs.

In the case where the R/W head Hrw and the servo head Hs integrally move towards the direction of the disk diameter from the left to right side for A of Fig. 3 during a seek operation, the tri-bit embedded servo signals SA and SB are read by the R/W head Hrw, and a position detection signal shown at B of Fig. 3 is obtained. When the R/W head Hrw reproduces only the embedded servo signal SA, only the pulse signal P2 is provided as a reproduced output, and the pulse signal P3 cannot be obtained. For this reason, a position detection signal [(Ab - Aa)/(Ab + Aa)] assumes 1. When the center of the R/W head Hrw is positioned within the width (TW/2) from the center of the track, the pulse signal P3 is obtained as the reproduced output. With the approach of the center of the R/W head Hrw to that of the track, the position detection signal becomes large gradually from -1 to 1. In response to the coincidence of the center of the R/W head Hrw with that of the track, (Aa = Ab) is established to bring the position detection signal to zero.

When the center of the R/W head Hrw comes on the side of the embedded servo signal SB, the amplitude Ab of the pulse signal P3 becomes large compared with the amplitude Aa of the pulse signal P2. As a result, the level of the position detection signal gradually becomes large from 0 to +1. When the center of the R/W head Hrw exceeds the width (TW/2) from the center of the track, the position detection signal takes +1 to give only the pulse signal P3. With further movement of the center of the R/W head Hrw by the distance of TW, the R/W head Hrw cannot reproduce the embedded servo signal SA or SB at all. Accordingly, an interval shown by oblique lines is an interval in which position detection cannot be done until the embedded servo signals of the adjacent next track are obtained.

On the other hand, the reproduced signal of the servo head is subjected to envelope detection, and a detection output shown in C of Fig. 3 is obtained. The detection output takes the minimum level when the servo head Hs is positioned within the width GB of the guard band. As a result, the interval of the positions of the minimum level corresponds to the track pitch TP. In addition to the bottom detection, the interval corresponding to the track pitch TP can be detected by providing a threshold level as shown by a broken line in D of Fig. 3 and slicing the envelope detection output with the threshold level.

As a practical matter, the number of the tracks crossed and time t required for moving the distance of the track pitch TP is detected from the reproduced signal of the servo head. The number of the tracks is necessary information for the seeking operation of the target track. Also, head-moving velocity v can be obtained from the relationship of (TP/t) = v.

c. Servo circuit

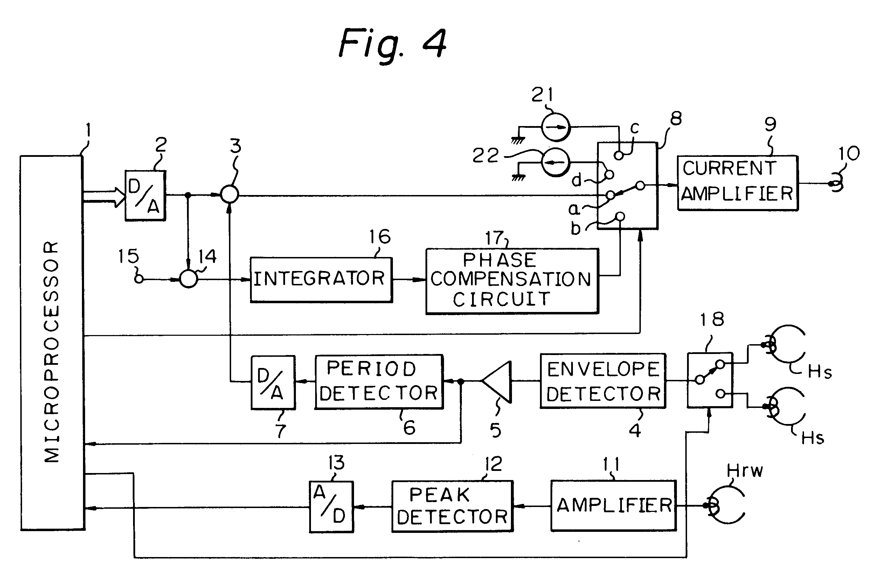

Fig. 4 shows in block form a servo circuit for positioning the R/W head onto the target track. In the positioning operation, coarse positioning by a velocity servo is executed first. Fine positioning by a positioning servo is then performed. In one fixed disk, a total of four heads, or a pair of R/W head and servo head, which contact one surface of the disk and a pair of R/W head and servo head, which contact the other disk surface are provided. The signal paths of the four heads are switched in various forms depending on their operation states. However, for simplicity, a single R/W head Hrw and two servo heads Hs are shown in Fig. 4.

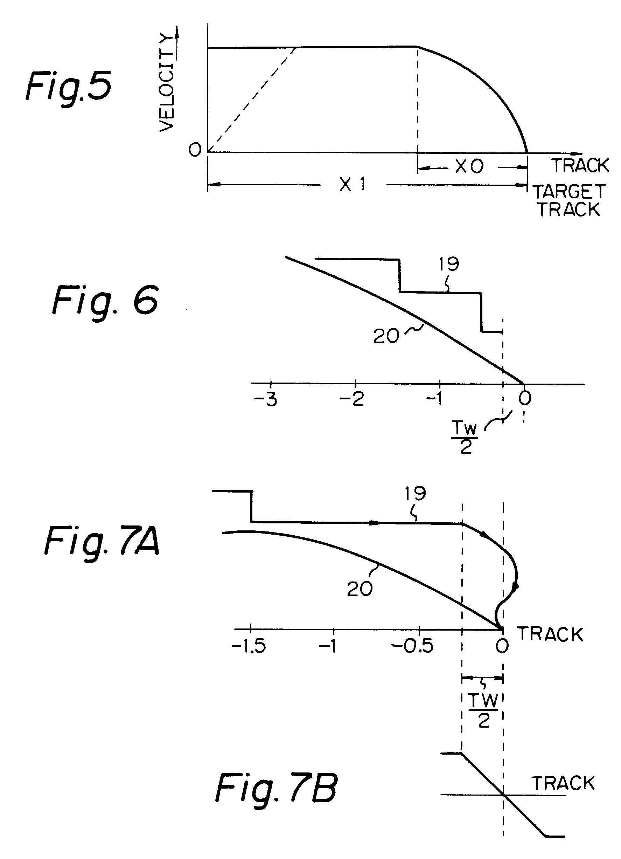

In Fig. 4, a velocity profile output from a microprocessor of a hard disk drive shown at 1 is applied to a D/A converter 2 by a seek-operation-start command. Fig. 5 shows one example of the velocity profile. The velocity profile is data for moving an actuator 10, for example, a voice coil motor at desired velocity as a target track, which is the track $x_1$ tracks distant from the present track. From the start time, data is generated to move the actuator at the maximum velocity. The velocity decreases from the target track at constant acceleration ( a velocity proportional to $\sqrt{x_0}$ for the track), and the velocity of the velocity profile becomes zero at the center of the target track. The velocity of the actuator 10 rises as shown by the broken line in Fig. 5. The data of the velocity profile is converted into an analog signal at the D/A converter 2 and inputted to an addition circuit 3.

Meanwhile, the reproduction signals of the servo heads Hs are switched by a selecting circuit 18 at a predetermined timing which is generated by the microprocessor 1 so as to inhibit using the reproduced signal from the servo head locating on the servo signal. The output signal of the selecting circuit is supplied to an envelope detector 4. The output of the envelope detector 4 is given to a level converter 5. In the level converter 5, the output signal of the envelope detector 4 is sliced so that a track-crossing signal is obtained from the level converter 5. The track-crossing signal is supplied to the microprocessor 1 and a period detector 6.

In the period detector 6, the velocity v of the actuator 10 is calculated from (TP/t) as mentioned before. The velocity v is converted into an analog signal at a D/A converter 7. A velocity signal from the D/A converter 7 is supplied to the addition circuit 3. The addition circuit 3 is composed of, for example, an input type operational amplifier, and when a loop gain of the servo circuit is large enough, a servo operation is performed so that the velocity signal of the actuator 10 and that of a velocity profile from the D/A converter 2 are equal to each other.

The output signal of the addition circuit 3 is given through an input terminal a of a switch circuit 8 and a current amplifier 9 to the actuator 10. The velocity of the actuator 10 is made equal to that designated by the velocity profile in response to a drive current fed to the actuator 10. The switch circuit 8 is controlled by the microprocessor 1 so that the input terminals of the circuit 8 are switched depending on an operation mode.

In addition, Fig. 6 shows a velocity change of the actuator 10 in the vicinity of a target track and a velocity profile 20. With respect to the velocity information of the actuator 10, that information before the center (TW/2) of the target track is the final velocity information, and the velocity does not become zero even if the velocity profile is zero.

Therefore, the positioning servo is required. A position detection signal is obtained before the center (TW/2) of the target track. For this reason, the switching from the velocity servo to the positioning servo is carried out in the interval from before the center (TW/2) of the target track to the center of the target track. Upon switching to the positioning servo, the step circuit 8 selects an input terminal b.

The reproduced signal from the R/W head Hrw is supplied via an amplifier 11 to a peak detector 12. The amplitudes Aa and Ab of the pulse signals P2 and P3 corresponding to the embedded servo signals SA and SB, respectively, are detected at the peak detector 12. The output signal of the peak detector 12 is converted into a digital signal at an A/D converter 13 and supplied to the microprocessor 1. In the microprocessor 1, the expression [(Ab - Aa)/(Ab + Aa)] is calculated to form a position detection signal.

The position detection signal provided from the microprocessor 1 is output to the D/A converter 2. The output signal of the D/A converter 2 is given to an addition circuit 14. To the addition circuit 14 is fed a position reference signal from a terminal 15, and the output signal of the addition circuit 14 is supplied through an integrator 16 to a phase compensation circuit 17. The output signal of the phase compensation circuit 17 is given through the input terminal b of the switch circuit 8 and the current amplifier 9 to the actuator 10.

The addition circuit 14 is made up of an input type operational amplifier as in the case of the addition circuit 3, and a drive current is applied to the actuator 10 so that the position detection signal takes the same level as the position reference signal. The position reference signal is set at a level corresponding to when the center of the R/W head Hrw coincides with that of the track, for example, at zero.

As shown at A of Fig. 7, when the R/W head Hrw is brought to a position before the center (TW/2) of the target track by the above-mentioned velocity servo, the positioning servo starts its operation, and the velocity 19 of the actuator becomes zero in the target track. This control is executed by the position detection signal shown at B of Fig. 7.

Also, in the case where the movement is made to an adjacent track, no velocity information can be obtained, because only one track-crossing signal can be obtained. Consequently, when the movement is made to the adjacent track, control different from the servo is performed by combining the above-mentioned velocity servo and the positioning servo.

At the time of the movement to the adjacent track, the switch circuit 8 sequentially selects input terminals c and d. The switching from the input terminal c to the input terminal d is done by a command given from the microprocessor 1 based on the track-crossing signal. To the input terminal c of the switch circuit 8 is connected a constant-current source 21 of IO, and to the input terminal d of the switch circuit 8 is connected a constant-current source 22 of -IO.

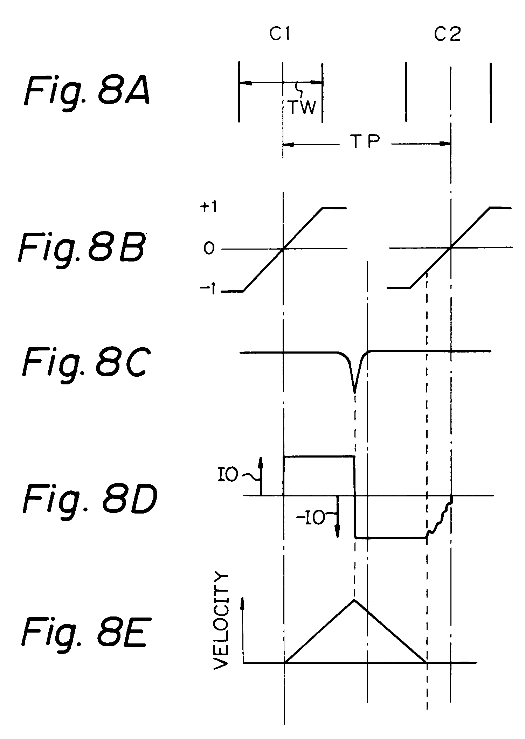

The operation of the movement toward the adjacent track will be explained referring to Fig. 8. As indicated at A of Fig. 8, description will be made to the case where the movement is done from the track with the center C1 to the track with the center C2. B of Fig. 8 shows a position detection signal developed from the embedded servo signals SA and SB, and C of Fig. 8 shows a track-crossing signal developed by the reproduction signal of the servo head Hs.

In response to the generation of a command for movement to an adjacent track, for instance, the input terminal c of the switch circuit 8 is selected with the result that the constant current +IO of the constant-current source 21 is supplied to the actuator 10 through the current amplifier 9. Next, in response to the generation of the track-crossing signal, the switch circuit 8 is switched to the state for selecting the input terminal d, and the constant current -IO is given to the actuator 10 through the current amplifier 9. As a result, the velocity of the actuator 10 rises at constant acceleration, as shown at E of Fig. 8, decreases at constant acceleration from the timing of the track-crossing signal, and becomes zero in the vicinity of the center C2 of the adjacent track. Also, the order of the selection of the input terminals c and d of the switch circuit 8 depends on the direction of an adjacent track for which a seek command is issued.

When the track-crossing signal is generated at the center position of the guard band, the velocity of the actuator 10 becomes 0 at the center C2 of the adjacent track. However, as shown at C of Fig. 8, there is a case where the track-crossing-signal-generation position does not coincide with the guard band center. Additionally, the state in which the center of the R/W head Hrw is positioned at the center of the adjacent track, must be held. Consequently, in the case where the center of the R/W head Hrw comes within the width of (TW/2) from the center of the track, the positioning servo is operated. By this positioning servo, the center of the R/W head Hrw is finally brought to the center C2 of the adjacent track.

d. Modifications

In the above-mentioned embodiment, description has been given on the case where one disk is driven. However, the invention may be applied to the case where two or more disks are driven. For instance, in the case of the provision of two disks, the embedded servo signals may be recorded on the respective disks in a manner similar to one embodiment or may be recorded on only one of them. In the latter system, the positioning of tracks in the disk surfaces on which no embedded signal is recorded, is done using the embedded servo signals recorded on the other disk.

In addition, a servo signal other than that of the tri-bit system may be employed.

According to the embodiments, an influence exerted by the embedded servo signals over the track-crossing signal can be prevented, and both the detection of actuator velocity and the number of crossed tracks can be performed precisely. Further, this invention, which is different from the conventional servo system for performing coarse positioning using the signal of an optical sensor provided separately from the disk, can prevent enlarging the thermal off-track and inability to execute coarse positioning. Moreover, no disk surface provided with only the servo signal is needed to suppress the rise of cost.

**Claims**

1. A servo system for positioning data transducer means relative to a plurality of substantially concentric data tracks on magnetic disk surfaces, said system comprising:

   data transducer means (Hrw) including at least first and second data transducer members respectively located relative to different magnetic disk surfaces, for reading and writing a data signal from and onto said concentric data tracks (C1n,C2n) and for reading a servo signal from servo sectors (SA,SB) provided on said magnetic disk surfaces;

   servo transducer means (HS) including at least first and second servo transducer members respectively located in relation to said first and second data transducer members and sensing crossing of said concentric data tracks in a track seeking operation to provide a track-crossing signal;

positioning means (9,10) for positioning said data transducer members at selected ones of said concentric data tracks during a data read/write operation and for moving said data transducer members with said servo transducer members from track to track during a track seeking operation; and

control means (1,2,3) for controlling said positioning means in response to outputs of said first and second servo transducer members and a servo signal read by said data transducer means,

characterised in that a positional relationship between said first and second servo transducer members relative to said servo sectors is established so that the servo transducer members are positioned on respective ones of said servo sectors on a time exclusive basis and in that the control means (1,2,3) comprises selecting means (18) for selecting the outputs of said first and second servo transducer members at a predetermined timing so as to inhibit using the output of the servo transducer member locating on a servo sector.

2. A disk-based data storage system including a servo-system according to claim 1 and a magnetic disc carrying a plurality of substantially concentric data tracks on each of different surfaces and having servo sectors embedded in said tracks to provide a servo signal for controlling positioning of the data transducer means.

3. A system as claimed in claim 1 or 2, wherein a distance $W_1$ between said first data transducer member and said first servo transducer member is selected to be
$W_1 = N_1 T_p$, where $N_1$ is an integer and $T_p$ is a track pitch, and a distance $W_2$ between said second data transducer member and said second servo transducer member is selected to be
$W_2 = N_2 T_p$, where $N_2$ is an integer and $T_p$ is the disc track pitch.

4. A servo system as claimed in claim 1 or 2, wherein a distance $W_1$ between said first data transducer member and said first servo transducer member is selected to be
$W_1 = (N_1 + \frac{1}{2})T_p$, where $N_1$ is an integer and $T_p$ is the disc track pitch,
and a distance $W_2$ between said second data transducer member and said second servo transducer member is selected to be
$W_2 = (N_2 + \frac{1}{2})T_p$, where $N_2$ is an integer and $T_p$ is the disc track pitch.

5. A servo system as claimed in claim 1, 2, 3 or 4, wherein said control means further comprises an envelope detector (4) for detecting an envelope of the outputs of the first and second servo transducer members.

6. A servo system as claimed in claim 5, wherein said control means further comprises track pulse generating means for generating a track crossing pulse in response to an output of said envelope detector.

7. A servo system as claimed in any one of the preceding claims, wherein said positional relationship is established for a disc in which servo sectors on the different magnetic disc surfaces are located on circumferentially different positions relative to a reference radial direction, respectively.

8. A servo system according to any one of the preceding claims wherein said positional relationship is established for a disc in which servo signals of even-numbered tracks and odd-numbered tracks are embedded on different magnetic surfaces, respectively.

**Patentansprüche**

1. Servosystem zum Positionieren einer Datenwandlereinrichtung relativ zu einer Vielzahl von im wesentlichen konzentrischen Datenspuren auf magnetischen Plattenoberflächen, mit einer Datenwandlereinrichtung (Hrw), die zumindest erste und zweite Datenwandlerelemente aufweist, welche bezüglich unterschiedlicher magnetischer Plattenoberflächen zum Lesen und Schreiben eines Datensignals von den bzw. in die betreffenden konzentrischen Datenspuren (C1n, C2n) und zum Lesen eines Servosignals aus auf den magnetischen Plattenoberflächen vorgesehenen Servosektoren (SA, SB) angeordnet sind,
mit einer Servowandlereinrichtung (HS), die zumindest erste und zweite Servowandlerelemente umfaßt, welche in Beziehung zu den ersten und zweiten Datenwandlerelementen angeordnet sind und welche das Kreuzen der konzentrischen Datenspuren in einem Spursuchvorgang zur Lieferung eines Spurkreuzungssignals ermitteln,
mit einer Positionierungseinrichtung (9,10) zum Positionieren der Datenwandlerelemente in ausgewählten Spuren der konzentrischen Datenspuren während eines Datenlese-/Datenschreibvorgangs und zum Bewegen der Datenwandlerelemente mit den Servowandlerelementen von Spur zur Spur während eines Spursuchvorgangs,

und mit einer Steuereinrichtung (1,2,3) zum Steuern der Positionierungseinrichtung auf Ausgangssignale der ersten und zweiten Servowandlerelemente und auf ein mittels der Datenwandlereinrichtung gelesenes Servosignal hin

**dadurch gekennzeichnet,**

daß eine Positionsbeziehung zwischen den ersten und zweiten Servowandlerelementen in bezug auf die Servosektoren derart herbeigeführt wird, daß die Servowandlerelemente auf einer zeitlich ausschließlichen Basis in entsprechenden Sektoren der Servosektoren positioniert sind,

und daß die Steuereinrichtung (1,2,3) eine Auswahleinrichtung (18) umfaßt für die Auswahl der Ausgangssignale der ersten und zweiten Servowandlerelemente zu einem solchen bestimmten Zeitpunkt, daß die Ausnutzung des Ausgangssignals des in einem Servosektor sich befindenden Servowandlerelementes verhindert ist.

2. Datenspeichersystem auf der Grundlage einer Plattenanordnung, mit einem Servosystem gemäß Anspruch 1 und einer magnetischen Platte, die auf unterschiedlichen Flächen jeweils eine Vielzahl von im wesentlichen konzentrischen Datenspuren trägt und die Servosektoren aufweist, welche in den betreffenden Spuren zur Lieferung eines der Steuerung der Positionierung der Datenwandlereinrichtung dienenden Servosignals eingelagert sind.

3. System nach Anspruch 1 oder 2, wobei eine Distanz $W_1$ zwischen dem ersten Datenwandlerelement und dem ersten Servowandlerelement so gewählt ist, daß der Beziehung
$W_1 = N_1 T_p$ genügt ist,
wobei $N_1$ eine ganze Zahl und $T_p$ eine Spurteilung ist,
und wobei eine Distanz $W_2$ zwischen dem zweiten Datenwandlerelement und dem zweiten Servowandlerelement so gewählt ist, daß der Beziehung
$W_2 = N_2 T_p$ genügt ist,
wobei $N_2$ eine ganze Zahl und $T_p$ die Plattenspurteilung ist.

4. Servosystem nach Anspruch 1 oder 2, wobei eine Distanz $W_1$ zwischen dem ersten Datenwandlerelement und dem ersten Servowandlerelement so gewählt ist, daß der Beziehung
$W_1 = (N_1 + 1/2) T_p$ genügt ist,
wobei $N_1$ eine ganze Zahl und $T_p$ die Plattenspurteilung ist,
und wobei eine Distanz $W_2$ zwischen dem zweiten Datenwandlerelement und dem zweiten Servowandlerelement so gewählt ist, daß der Beziehung
$W_2 = (N_2 + 1/2)T_p$ genügt ist,
wobei $N_2$ eine ganze Zahl und $T_p$ die Plattenspurteilung ist.

5. Servosystem nach Anspruch 1, 2, 3 oder 4, wobei die Steuereinrichtung ferner einen Hüllkurvendetektor (4) zum Ermitteln einer Hüllkurve der Ausgangssignale der ersten und zweiten Servowandlerelemente umfaßt.

6. Servosystem nach Anspruch 5, wobei die Steuereinrichtung ferner eine Spurimpulserzeugungseinrichtung für die Erzeugung eines Spurkreuzungssignals auf ein Ausgangssignal des Hüllkurvendetektors hin umfaßt.

7. Servosystem nach irgendeinem der vorhergehenden Ansprüche, wobei die Positionsbeziehung für eine Platte festgelegt ist, bei der die Servosektoren auf den verschiedenen magnetischen Plattenoberflächen in umfangsmäßig unterschiedlichen Positionen bezogen auf eine Referenz-Radialrichtung angeordnet sind.

8. Servosystem nach irgendeinem der vorhergehenden Ansprüche, wobei die Positionsbeziehung für eine Platte festgelegt ist, bei der Servosignale von geradzahligen Spuren und von ungeradzahligen Spuren auf unterschiedlichen magnetischen Flächen eingelagert sind.

**Revendications**

1. Ensemble d'asservissement destiné au positionnement d'un dispositif à transducteurs de données par rapport à plusieurs pistes sensiblement concentriques de données formées sur des faces de disque magnétique, l'ensemble comprenant :

un dispositif (Hrw) à transducteurs de données comprenant au moins un premier et un second organe transducteur de données placés respectivement par rapport à des faces différentes de disque magnétique afin qu'ils lisent et écrivent un signal de données provenant des pistes concentriques de données et destiné à ces pistes (C1n, C2n) et qu'ils lisent un signal d'asservissement de secteurs d'asservissement (SA, SB) formés sur les faces de disque magnétique,

un dispositif (Hs) à transducteurs d'asservissement comprenant au moins un premier et un second organe transducteur d'asservissement placés respectivement par rapport au premier et au second organe transducteur de données et détectant le recoupement des pistes concentriques de données dans une opération de recherche de piste pour la formation d'un signal de recoupement de pistes,

un dispositif (9, 10) destiné à positionner des organes transducteurs de données sur des pistes concentriques choisies de données pendant une opération de lecture-écriture de données et à déplacer les organes transducteurs de données avec les organes transducteurs d'asservissement d'une piste à la suivante pendant une opération de recherche de piste, et

un dispositif (1, 2, 3) de commande du dispositif de positionnement d'après les signaux de sortie du premier et du second organe transducteur d'asservissement et d'un signal d'asservissement lu par le dispositif à transducteurs de données,

caractérisé en ce qu'une relation de position est établie entre le premier et le second organe transducteur d'asservissement par rapport aux secteurs d'asservissement afin que les organes transducteurs d'asservissement soient positionnés sur des secteurs respectifs d'asservissement d'une manière exclusive temporellement, et en ce que le dispositif de commande (1, 2, 3) comprend un dispositif (18) de sélection des signaux de sortie du premier et du second organe transducteur d'asservissement avec une synchronisation prédéterminée afin que l'utilisation du signal de sortie de l'organe transducteur d'asservissement qui se positionne sur un secteur d'asservissement soit inhibée.

2. Ensemble de mémorisation de données à base de disque mettant en oeuvre un ensemble d'asservissement selon la revendication 1, et un disque magnétique portant plusieurs pistes sensiblement concentriques de données sur chacune des faces différentes et ayant des secteurs d'asservissement incorporés aux pistes pour la formation d'un signal d'asservissement utile pour la commande du positionnement du dispositif à transducteurs de données.

3. Ensemble selon la revendication 1 ou 2, dans lequel la distance $W_1$ comprise entre le premier organe transducteur de données et le premier organe transducteur d'asservissement est sélectionnée afin qu'elle soit telle que :

$$W_1 = N_1 T_p$$

$N_1$ étant un nombre entier et $T_p$ le pas des pistes, et la distance $W_2$ comprise entre le second organe transducteur de données et le second organe transducteur d'asservissement est choisie à une valeur telle que :

$$W_2 = N_2 T_p$$

$N_2$ étant un nombre entier et $T_p$ le pas des pistes du disque.

4. Ensemble d'asservissement selon la revendication 1 ou 2, dans lequel la distance $W_1$ comprise entre le premier organe transducteur de données et le premier organe transducteur d'asservissement est choisie afin qu'elle soit telle que :

$$W_1 = (N_1 + 1/2) T_p$$

$N_1$ étant un nombre entier et $T_p$ étant le pas des pistes du disque, et

la distance $W_2$ comprise entre le second organe transducteur de données et le second organe transducteur d'asservissement est choisie afin qu'elle soit telle que :

$$W_2 = (N_2 + 1/2) T_p$$

$N_2$ étant un nombre entier et $T_p$ étant le pas des pistes du disque.

5. Ensemble d'asservissement selon une quelconque des revendications 1 à 4, dans lequel le dispositif de commande comporte en outre un détecteur (4) d'enveloppe destiné à détecter une enveloppe des signaux de sortie du premier et du second organe transducteur d'asservissement.

6. Ensemble d'asservissement selon la revendication 5, dans lequel le dispositif de commande comporte en outre un dispositif générateur d'impulsions de piste destiné à créer une impulsion de recoupement de pistes en fonction du signal de sortie du détecteur d'enveloppe.

7. Ensemble d'asservissement selon l'une quelconque des revendications précédentes, dans lequel la relation de position est établie pour un disque dans lequel des secteurs d'asservissement formés sur les différentes faces du disque magnétique occupent des positions circonférentiellement différentes par rapport à une direction radiale de référence.

8. Ensemble d'asservissement selon l'une quelconque des revendications précédentes, dans lequel la disposition relative est établie pour un disque dans lequel des signaux d'asservissement de pistes de numéro pair et de pistes de numéro impair sont incorporés à des faces magnétiques différentes.

## Fig.IA

## Fig.IB

Fig.2A

Fig.2B

Fig.3A

Fig.3B

Fig.3C

Fig.3D

# Fig. 4

EP 0 250 138 B1

Fig.5

Fig. 6

Fig. 7A

Fig. 7B

Fig. 8A

Fig. 8B

Fig. 8C

Fig. 8D

Fig. 8E

## Fig. 9A

## Fig. 9B